# FASCICULE DE BREVET EUROPEEN

(11) **EP 1 627 514 B1**
(45) Date de publication et mention de la délivrance du brevet: **10.10.2007**
(21) Numéro de dépôt: 04767170.6
(22) Date de dépôt: 25.05.2004
(51) Int. Cl.: H04L 29/06

(54) **PROCEDE ET SYSTEME DE GESTION DYNAMIQUE D'OBJETS PHYSIQUES EN RESEAU BASEE SUR LA LOCALISATION**
AUF STANDORT BASIERENDES VERFAHREN UND SYSTEM ZUM DYNAMISCHEN VERWALTEN VON PHYSISCHEN NETZWERKOBJEKTEN
LOCATION-BASED METHOD AND SYSTEM FOR DYNAMICALLY MANAGING NETWORK PHYSICAL OBJECTS

(30) Priorité: 28.05.2003 FR 0306497
(43) Date de publication de la demande: 22.02.2006
(73) Titulaire: FRANCE TELECOM, 75015 Paris (FR)
(72) Inventeur: CHRAIET, Naoufel, F-38000 Grenoble (FR); PRIVAT, Gilles, F-38240 Meylan (FR); VIBOUD, Jean-Paul, F-38660 Le Touvet (FR)
(74) Mandataire: Verdure, Stéphane
(86) Numéro de dépôt international: PCT/FR2004/001292
(87) Numéro de publication internationale: WO 2004/110014

(56) Documents cités:
- WO-A-97/41654
- US-A1- 2003 065 710
- US-A1- 2003 074 422

## Description

La présente invention concerne le domaine des objets communicants et plus spécifiquement le domaine de la gestion d'un ensemble de tels objets. Ces objets communicants sont des objets ayant une fonction propre et dotés de capacités de communication. Plus précisément, un objet communicant est un couple d'automates hybrides, l'un physique l'autre informationnel. La distinction est plus intuitive que formelle, puisqu'un automate informationnel est évidemment mis en oeuvre sur une machine physique en général microélectronique..., et une machine physique peut toujours se modéliser à divers niveaux en tant qu'automate formel. La distinction entre les deux est néanmoins suffisamment claire en général pour qu'on puisse les modéliser séparément : l'automate informationnel comprend la capacité de traitement/stockage « embarquée » de l'objet au sens défini plus haut, et la machine physique tout ce qui correspond à la fonction propre, c'est-à-dire non informationnelle, de l'objet, incluant à la fois les interfaces physiques des capteurs et actionneurs et l'automate qui en modélise le fonctionnement abstrait.

Conjointement, ce double automate est doté de capacités pour :
- l'acquisition d'information à partir de son état physique propre, ou, le cas échéant, de son environnement, par l'intermédiaire de capteurs dans différentes modalités physiques,
- le traitement et le stockage locaux d'information (fonctions d'automate informationnel au sens propre, c'est-à-dire comprenant l'état de l'automate et la fonction de transition d'état à partir des entrées que sont les capteurs et les interfaces réseau),
- l'émission de l'information issue des capteurs ou de l'état propre de l'objet vers d'autres objets, ainsi que la réception d'information en provenance d'autres objets, par l'intermédiaire d'un support réseau banalisé, typiquement sans fil, et le support d'un protocole permettant leur inter-fonctionnement généralisé,
- la réalisation d'actions en retour sur son état physique propre, ou, le cas échéant, sur l'environnement, par l'intermédiaire d'actionneurs embarqués.

Les capacités conjointes de traitement informationnel et de transduction physique (capteurs et actionneurs) de l'objet en réseau sont vues dans la suite au travers d'une abstraction informatique appelée ici "service", qui peut être formalisée, dans l'infrastructure logicielle qui les gère, de manière déclarative (par exemple en décrivant ces capacités dans un langage basé sur XML) ou programmatique (par exemple une méthode ou un ensemble de méthodes dans un langage de programmation basé-objet comme Java). C'est cette entité informatique de service qui sera "échangée" au travers du réseau entre objets communicants "consommateurs de services" et objets "fournisseurs de service", en sachant que les objets jouent la plupart du temps les deux rôles.

De nombreux types d'objets communicants existent et interagissent en échangeant des services : on peut par exemple citer le distributeur de boisson que l'on paie avec un téléphone mobile, le stylo communicant, qui offre un service d'interface de saisie pour un assistant numérique personnel (PDA), l'oreillette sans fil qui offre un service d'interface vocale pour un téléphone mobile ou encore l'écran qui offre un service d'interface de sortie visuelle pour un PDA, le capteur de température et de pression qui offre son information à un autre service localisé sur le PDA, etc.

Les infrastructures logicielles (middleware) de découverte de services comprennent notamment :
- JINI (voir "JINI Network Technology", publié par la société Sun Microsystems, Inc. et site web www.jini.org) ;
- UPnP (voir "Universal Plug and Play Device Architecture" publié en juin 2000 par la société Microsoft Corporation et site web www.upnp.org ) ;
- Salutation dont les spécifications sont publiées par la société The Salutation Consortium (voir site web www.salutation.org).
Ces architectures proposent des solutions génériques pour permettre l'échange de services logiciels entre machines, mais ne proposent pas de solutions génériques pour traiter concrètement la localisation physique d'un logiciel. Or la prise en compte de la localisation physique est essentielle en cas d'objet communicant mobile, par exemple attaché à un utilisateur qui se déplace.

De plus, les objet communicants existants et les systèmes de gestion associés, parfois exploitant des informations de localisation provenant par exemple de réseaux GSM, sont fréquemment dédiés à une application ou à un environnement spécifiques. Ainsi il est difficile de faire aisément interagir des objets communicants non issus du même système. De plus, l'activation de ces objets requiert le plus souvent une activation spécifique de la part de l'utilisateur.

Le document US 2003/0065710 décrit un système comprenant des équipements fournissant des services associés à des localisations. Un équipement client entre dans une nouvelle localisation et reçoit une liste des équipements disponibles dans cette nouvelle localisation.

Le document WO 97/41654 décrit un système dans un réseau de télécommunications mobiles permettant le stockage d'informations et leur acheminement vers chaque utilisateur, dans le cadre de services souscrits par ce dernier. Un profil de diffusion définissant la fréquence et/ou la forme des informations à délivrer dans le cadre de chaque service est établi pour chaque utilisateur.

La présente invention vise à proposer un procédé et un système de gestion d'un ensemble d'objets communicants qui soient moins affectés par les limitations citées ci-dessus.

Ainsi suivant un premier aspect, l'invention propose un procédé de gestion d'un ensemble d'objets communicants, dans lequel un annuaire de services répertorie des informations relatives à des objets communicants fournisseurs de services, à des services respectifs accessibles auprès de ces objets communicants et à des zones de portée respectivement associées auxdits services. Le procédé comprend les étapes suivantes :
- localiser un objet communicant consommateur de services et l'identifier,
- déterminer une liste des services accessibles auprès d'objets communicants fournisseurs de services figurant dans l'annuaire, en fonction de la localisation et de l'identification de l'objet communiquant consommateur de services identifié relativement aux services accessibles auprès des objets communicants fournisseurs de services et aux zones de portée associées auxdits services, et
- déclencher au moins l'envoi à l'objet communicant consommateur de services identifié, d'une information relative aux services de la liste.

Suivant un second aspect, l'invention propose un système de gestion d'un ensemble d'objets communicants comportant :
- un annuaire de services répertoriant des informations relatives à des objets communicants fournisseurs de services, à des services respectifs accessibles auprès de ces objets communicants et à des zones de portée respectivement associées auxdits services,
- des moyens de localisation et d'identification d'objets communicants consommateurs de services,
- des moyens d'interprétation des informations de localisation des objets communicants consommateurs de services par rapport aux zones de portée de services répertoriées dans l'annuaire,
- des moyens d'interprétation des informations d'identification des objets communicants consommateurs de services par rapport aux services répertoriés dans l'annuaire,
- des moyens de détermination d'une liste de services accessibles auprès d'objets communicants fournisseurs de services figurant dans l'annuaire, en fonction des résultats délivrés par les moyens d'interprétation des informations de localisation et d'identification des objets communicants fournisseurs de services,
- des moyens pour déclencher au moins l'envoi à l'objet communiquant consommateur de services identifié d'une information relative aux services de la liste.

Les zones de portées, depuis lesquelles les services peuvent être accessibles sont définies suivant le modèle de l'espace (concret ou abstrait) sous-jacent utilisé par les moyens de localisation et d'interprétation des informations de localisation.

Il peut s'agir d'un modèle géométrique classique. On parle alors de proximité (comme dans un modèle cartésien, affine..) au sens de la distance dans ce modèle.

Il peut encore s'agir d'un modèle de type graphe. On parle alors de proximité sur le graphe (c'est la distance évaluée en nombre d'arcs sur le chemin le plus court séparant deux noeuds du graphe).

La mise en oeuvre d'un procédé ou d'un système selon l'invention permet que des services soient proposés de façon dynamique à des objets consommateurs de services susceptibles de les utiliser, en exploitant des informations de localisation relatives aux zones de portée des services accessibles auprès d'objets fournisseurs de services, et à la localisation de l'objet consommateur de service.

L'annuaire de services peut être centralisé, ou encore réparti sur plusieurs machines physiques situées en des points géographiques divers.

Les informations relatives à la localisation des objets et à la portée des services accessibles peuvent par ailleurs être de nature différente et être fournis par des dispositifs de technologies différentes cohabitant au sein du même système.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système de gestion d'objets communicants dans un premier mode de réalisation de l'invention ;
- la figure 2 représente un système de gestion d'objets communicants dans un second mode de réalisation de l'invention.

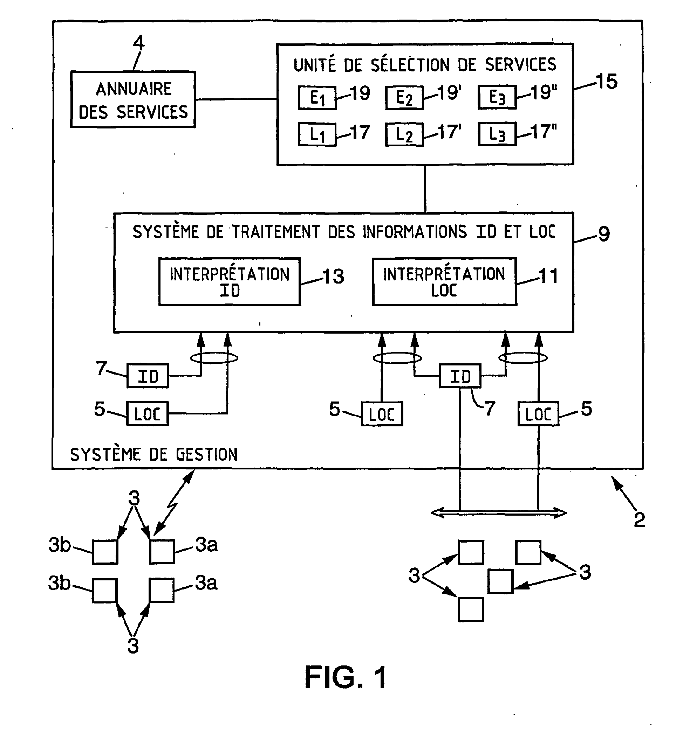

La figure 1 représente un système de gestion 2 d'objets communicants 3 dans un mode de réalisation de l'invention. Les objets communicants 3 comprennent des objets communicants fournisseurs de services 3a et des objets communicants consommateurs de services 3b. Les objets communicants fournisseurs de services 3a sont dotés de moyens ou fonctions leur permettant d'interagir avec leur environnement (capteurs ou actionneurs) et de fournir des services à notamment des objets communicants consommateurs de services 3b. On notera qu'un objet communicant 3, qu'il soit fixe ou mobile, peut être, tour à tour ou à la fois, consommateur de services et fournisseur de services.

Ce système de gestion 2 comprend par exemple plusieurs moyens de localisation 5 adaptés chacun pour localiser des objets communicants consommateurs de services 3b (cette localisation est par exemple initiée soit par l'objet communicant lui-même qui se manifeste de façon active auprès du système 2, soit directement par le système 2).

Des moyens de localisation 5 selon des technologies variées peuvent cohabiter dans le système de gestion 2. Les moyens de localisation peuvent être par exemple des systèmes de positionnement complet multi capteurs (GPS ou triangulation par bornes IEEE 802.11), ou encore des capteurs isolés associés à des représentants logiciels combinant des informations brutes issues des capteurs, ou encore des informations de positionnement inscrites durablement lors de l'installation d'objets fixes ou rarement déplacés. Ainsi les informations de localisation délivrées par les moyens de localisation 5 peuvent être de nature très diverse : un objet communicant 3 peut par exemple être localisé sous la forme longitude, latitude. La localisation d'un autre objet communicant pourra être de la forme « présent sur le réseau IP local de Monsieur X, habitant à Y », etc.

Le système 2 comporte en outre des moyens d'identification d'objets communicants 7, adaptés pour identifier des objets communicants consommateurs de services 3b après localisation.

Le système de supervision 2 comprend un système de traitement 9 des informations de localisation et d'identification. Ce système de traitement 9, comprend des moyens d'interprétation des informations de localisation 11 en provenance des moyens de localisation 5 et des moyens d'interprétation des informations d'identification 13 en provenance des moyens d'identification 7. Les moyens d'interprétation des informations de localisation 11 du système 9 sont adaptés pour traiter les diverses informations de localisation reçues afin d'en extraire les informations pertinentes, selon des critères qui peuvent être paramétrables. Ils peuvent par exemple identifier à partir des informations de localisation relatives à un objet consommateur de services 3b localisé quelles sont les zones de portée de service, « pertinentes » pour l'objet communicant consommateur de services identifié et localisé. Suivant les critères introduits, on entendra par « pertinentes » par exemple les zones de portée de service telles que l'objet identifié se trouve à l'intérieur de celles-ci, mais ce peut être également des zones de portée qui sont proches, ou qui nécessiteraient une intervention aisément réalisable de la part de l'objet communicant consommateur 3b localisé, par exemple une connexion réseau. Le système de traitement 9 peut également par exemple faire la relation entre des informations de localisation de types divers. Il peut par exemple extraire des informations de localisation continues d'un modèle métrique ou cartésien des informations de localisation correspondant à un modèle ensembliste (l'objet est ou non dans une zone donnée).

Les moyens d'interprétation des informations d'identification 13 du système 9 sont adaptés pour traiter les diverses informations d'identification reçues, afin d'en extraire les informations pertinentes selon des critères qui peuvent être paramétrables. Ils peuvent, par exemple, à l'aide d'informations d'identification relative à un objet identifié, définir parmi les services de l'annuaire quels sont les services « pertinents », c'est-à-dire susceptibles d'être consommés par l'objet consommateur de services localisé, en fonction de l'identification (par exemple, l'objet consommateur localisé est-il défini dans le système ?), ou par exemple de paramètres d'identification liés à des technologies relatives (par exemple, si des services particuliers nécessitent un écran et que l'objet communicant n'en est pas pourvu, il n'est pas utile de proposer un tel service à l'objet communicant ; un tel renseignement peut faire partie des paramètres d'identification) ou encore en fonction du profil utilisateur de l'objet consommateur de services, ou encore en fonction de droits d'accès payés ou non par l'utilisateur associé à l'objet communicant.

Le système 2 comprend un annuaire de services 4. Cet annuaire 4 répertorie des informations relatives aux objets fournisseurs de services 3a, à des services accessibles auprès de ces objets fournisseurs de services 3a et à des zones de portée associées à ces services. L'annuaire 4 peut être renseigné de diverses manières, par exemple en fonction des objets communicants fournisseurs de services. Certaines parties, peuvent avoir été renseignées dans une phase d'initialisation du système, par l'installateur ou l'utilisateur de l'objet communicant 3a. Pour des informations relatives à des objets mobiles, l'annuaire 4 peut être mis à jour régulièrement, par, des sessions d'échange entre l'annuaire 4 et l'objet communicant fournisseur de service ou son utilisateur le cas échéant (par exemple lors de chaque nouvelle localisation d'un objet fournisseur de services 3a, comme on le verra ultérieurement).

Le système de gestion 2 comprend en outre une unité de sélection de services 15. Cette unité 15 comprend des moyens 17, par exemple logiciels, de détermination d'une liste L1 de services accessibles auprès d'objets communicants fournisseurs de services figurant dans l'annuaire, en fonction de résultats délivrés par les' moyens d'interprétation des informations de localisation 11 et les moyens d'interprétation des informations d'identification 13 des objets communicants fournisseurs de services. La liste finale peut correspondre aux services interprétés « pertinents » et associés à des zones de services interprétées « pertinentes », par rapport à l'objet communicant consommateur de services 3b considéré.

L'unité 15 comprend également des moyens 19 qui vont proposer les services de la liste déterminée par les moyens 17 à un objet communicant consommateur de services identifié et localisé par les moyens 5 et 7. Les moyens 19 vont ainsi envoyer une proposition relative aux services listés, à l'objet communicant consommateur de service directement, accompagnée des caractéristiques essentielles à partir desquelles l'objet consommateur 3b peut soit consommer des services auprès des objets fournisseurs correspondants, soit demander à l'annuaire les coordonnées précises du service pour ensuite appeler le service. Ces données peuvent être personnalisées en fonction de l'objet 3b. Par exemple, si ce dernier dispose de moyens de communication IP, l'adresse IP de l'objet fournisseur de services peut être fournie. Pour un autre objet consommateur 3b, ce sera par exemple l'adresse Bluetooth etc.

Des moyens de communication, par exemple, par accès à des réseaux sans fils permettent aux objets communicants 3 et au système de gestion 2 de dialoguer entre eux, directement ou via un réseau.

Dans un mode de réalisation, l'ensemble des parties constitutives du système de gestion 2 sont par exemple réparties en divers points géographiques et reliées en réseau.

Avantageusement les moyens de localisation 5 et les moyens de d'identification 7 sont adaptés pour localiser et identifier également les objets communicants fournisseurs de services 3a. Par ailleurs le système de traitement 9 est adapté pour, à l'aide des informations relatives à la localisation et à l'identification d'objets communicants fournisseurs de services délivrées, mettre à jour les différents champs de l'annuaire de service. Les moyens d'interprétation de localisation 11 et les moyens d'interprétation d'identification 13 sont adaptés pour mettre à jour conjointement la zone de portée d'un service accessible auprès d'un objet communicant fournisseur de service 3a identifié et localisé. Cette mise à jour s'effectue à partir des informations d'identification et de localisation (la zone de portée d'un objet fournisseur de services 3a via réseau IP local identifié comme tel et localisé sur un réseau IP donné lors d'une nouvelle installation verra sa zone de portée de service par exemple égale audit réseau IP).

Dans un mode de réalisation préféré de l'invention, l'unité de sélection des services 15 comprend des moyens 17' pour déterminer, pour un ou plusieurs services S accessibles auprès d'un objet communicant fournisseur de services 3a identifié et localisé, une liste L₂ d'objets communicants consommateurs de services 3b. Les objets de cette liste L₂ sont déterminés en fonction du service S et de la zone de portée associée, et ce relativement aux localisations et identifications respectives des objets communicants consommateurs de services, selon par exemple des critères équivalents à ceux considérés dans le cas de l'établissement de la liste L₁ d'objets communicants consommateurs de services.

L'unité de sélection des services 15 comprend des moyens 19' adaptés pour déclencher au moins l'envoi (E₂) d'une information relative à des services accessibles auprès de l'objet communicant fournisseur de services 3a identifié à des objets communicants consommateurs de services de la liste L₂. Les services S seront ainsi proposés de façon proactive, aux objets communicants susceptibles de consommer ces services. Tous les services S pourront être proposés aux objets 3b de la liste L₂. Dans un mode de réalisation, des services pourront être proposés de façon sélective aux objets consommateurs 3b de la liste L₂, en fonction par exemple d'informations d'identification, pour mieux cibler les consommateurs 3b potentiels.

Cette caractéristique permet d'informer les objets consommateurs 3b pour lesquels un au moins des services d'un objet communicant fournisseur de services est « pertinent », de l'accessibilité, par exemple suite à un déplacement de l'objet communicant fournisseur de services.

Avantageusement un objet communicant 3 peut effectuer une requête à destination du système de gestion 2.

Cette requête comporte un certain nombre de critères, qui peuvent définir par exemple un ou plusieurs éléments tels que : type de services, type d'objet communicant, zone de portée de service, ou encore d'autres critères correspondant à un champ de l'annuaire.

La requête peut par exemple définir des critères tels que : services de type "services destinés aux enfants" dont la zone de portée comprend le lieu des prochaines vacances de l'utilisateur de l'objet communicant 3.

L'unité de sélection de services 15 comprend des moyens 17" pour déterminer une liste de services L₃ correspondant aux critères de la requête effectuée par l'objet communicant 3.

Pour établir la liste L₃, il est avantageusement tenu compte, quand aucun critère de localisation n'est précisé dans la requête, de la localisation de l'objet communicant dont est issue la requête, afin de ne proposer que des services pertinents (en terme de proximité) par rapport à l'objet communicant.

L'unité de sélection 15 comprend également des moyens 19" adaptés pour déclencher l'envoi à l'objet communication du résultat de la requête (E₃). Ce résultat peut prendre la forme de la liste de services définie (L₃), avec les informations nécessaires pour accéder aux services listés, le cas échéant, une fois dans les zones de portée respectivement associées.

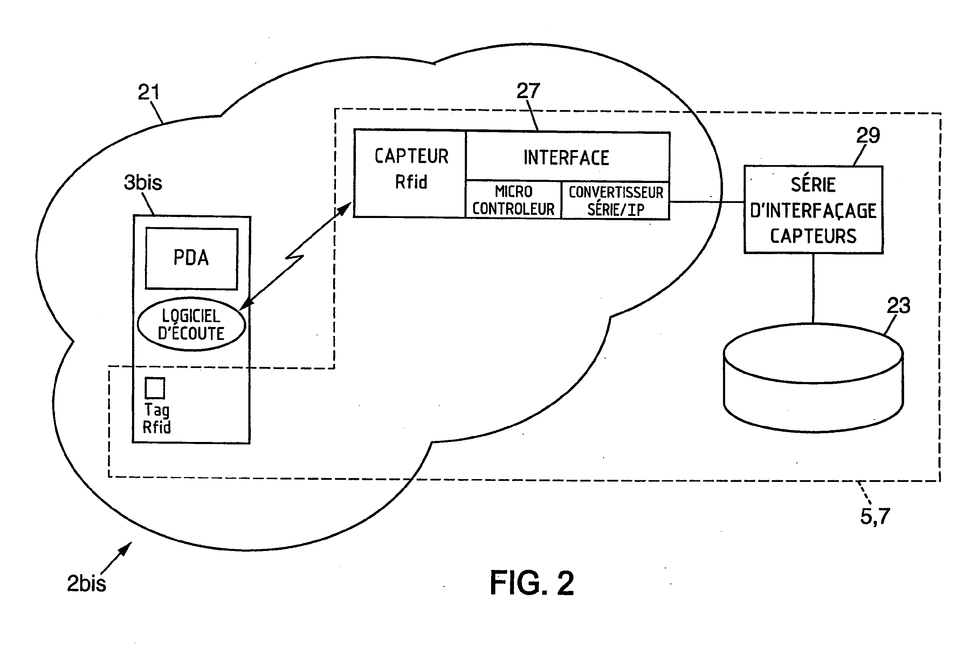

Considérons maintenant le cas particulier illustré par la figure 2 de mise en oeuvre de l'invention relativement à une pièce 21 d'un immeuble, permettant de mettre en oeuvre un service de « borne virtuelle », qui représentant un sous-ensemble 2bis d'un système global du type décrit sur la figure 1 et comportant par exemple plusieurs technologies. La pièce 21 est équipée d'un ensemble d'objets communicants 3, de nature diverse. L'ensemble des objets communicants peuvent être mis en réseau spontanément via une infrastructure JINI et des logiciels écrits en JAVA s'appuyant sur cette infrastructure (voir "The Java Language Specification" publié par la société Sun Mycrosystems, Inc.).

Une phase d'initialisation du système 2bis est préalablement menée, au cours de laquelle les objets communicants fournisseurs de services 3a, selon le mécanisme Jini, créent, découvrent et s'enregistrent auprès de l'annuaire de services 4 (non représenté sur la figure 2). Le sous-système 2bis initialise un espace mémoire partagé 23, par exemple Javaspace de Jini. Par ailleurs, des objet communicants consommateurs de services 3b comprennent chacun un utilisateur équipé d'un assistant numérique personnel (PDA) disposant d'une étiquette électronique. Cette étiquette électronique comprend un émetteur/récepteur et stocke des informations relatives à l'identification du PDA. Elle est par exemple conforme aux standards RFID (Radio Frequency Identification ; voir le site web www.RFID.org). Par la suite, on appellera cette étiquette "tag RFID". Ces objets 3b vont rechercher l'annuaire 4, ainsi qu'un service d'identification pour enregistrer leurs informations d'identification et leurs moyens de communication avec notamment les adresses correspondantes (IP, messagerie électronique, identifiant Bluetooth ...), et qu'un service d'enregistrement pour s'enregistrer comme consommateur de services. Ces services d'identification et d'enregistrement font partie des moyens d'identification 7 décrits dans le cas d'un système 1, regroupant par exemple plusieurs types de sous-systèmes distincts.

L'objet communicant 3b consommateur de services représenté sur la figure 2 est constitué d'un utilisateur équipé d'un PDA disposant d'un tag RFID et d'un logiciel d'écoute embarqué dans le PDA, qui place ce dernier à l'écoute de son environnement. Un PDA générique ainsi équipé peut télécharger à la volée les différents logiciels ou interfaces de commandes transmis, puis libérer les ressources quand il n'en a plus besoin.

L'objet 3b arrive dans cette pièce 21. Il est détecté par un capteur RFID 27 qui dialogue avec son tag RFID. Le capteur RFID 27 comprend une antenne, des circuits électroniques unis d'une interface comprenant des modules série/IP. Il peut établir une session IP (tunnel) avec un service d'interfaçage de capteurs 29, afin de lui transmettre les informations d'identification correspondant au tag RFID dont est muni l'objet 3b. Le service d'interfaçage 29 va créer une nouvelle entrée dans la mémoire partagée 23. Cette entrée correspond à un identifiant du capteur 27 qui a détecté l'objet communicant 3b et à l'identifiant correspondant au tag détecté. L'arrivée de cette nouvelle entrée va permettre d'identifier l'équipement qui correspond au tag RFID (en effet, la technologie RFID permet grâce à l'identification des tags, d'identifier le PDA) et de localiser l'équipement, grâce à l'identifiant du capteur. Les opérations d'identification et de localisation sont donc réalisées en une fois dans le présent cas. Les moyens de localisation 5 et d'identification 7 décrits par rapport à la figure 1 comprennent dans ce cas le tag collé sur le PDA, le lecteur de tag RFID 27 muni de son interface, le service d'interfaçage de capteurs 29 et l'espace mémoire partagé 23.

Une fois la liste L1 de services de voisinage déterminée (par exemple, les services disponibles dans la pièce) et si l'objet communicant 3b s'est bien enregistré comme client du système dans le service d'enregistrement en phase d'initialisation, le sous-système 2bis informe l'objet 3b (à au moins une adresse figurant dans la mémoire partagée 23) qu'il peut accéder à un service « borne virtuelle », et lui fournit les informations pour y accéder. Le PDA appelle alors le service « borne virtuelle ». Et le service demandé envoie son interface, par exemple graphique, pour présenter la liste L1 des services déterminés, sur le PDA.

Ce service « borne virtuelle » s'enregistre en tant que service, auprès de l'annuaire, avec comme paramètre l'identifiant du capteur physique qu'il représente. La zone de portée de service peut être définie par exemple, égale à la pièce 21, ou encore à la zone de détection du capteur 27, ou encore l'appartement etc.

Ainsi tout se passe comme si l'utilisateur associé à l'objet communicant 3b avait interrogé une borne d'accueil à l'entrée de la pièce, mais selon l'invention, c'est l'environnement qui propose le service, dans l'exemple décrit figure 2 du type « borne virtuelle », et non pas l'utilisateur qui le demande. De plus, la borne virtuelle peut proposer des services correspondant à un certain de critères par exemple paramétrables (accessibilité depuis la pièce en question, éventuellement adaptation suivant le profil utilisateur etc).

Un procédé ou un système de gestion selon l'invention permet de faire cohabiter au sein d'un même système différents types de technologie, notamment d'objets communicants, de localisation, indépendamment de la façon dont les différents éléments sont répartis. Il permet encore d'implémenter facilement de nouveaux services.

## Revendications

1. Procédé de gestion d'un ensemble d'objets communicants (3) dans lequel un annuaire de services (4) répertorie des informations relatives à des objets communicants fournisseurs de services (3a), à des services respectifs accessibles auprès de ces objets communicants fournisseurs de services et à des zones de portée respectivement associées à des services des fournisseurs de services, le procédé comprenant les étapes suivantes :
- localiser un objet communicant consommateur de services (3b) et l'identifier par une identification,
- déterminer une première liste (L₁) des services accessibles auprès d'objets communicants fournisseurs de services figurant dans l'annuaire, en fonction de la localisation et de l'identification en utilisant les informations relatives aux services accessibles auprès des objets communicants fournisseurs de services et aux zones de portée associées auxdits services, et
- déclencher au moins l'envoi à l'objet communicant consommateur de services identifié (3b), d'une information relative aux services de ladite première liste (L₁) ;
ledit procédé étant **caractérisé en ce qu'**il comprend en outre les étapes suivantes :
- localiser un objet communiquant fournisseur de services (3a) et l'identifier,
- mettre à jour dans l'annuaire de services (4) les informations relatives aux services accessibles auprès de l'objet fournisseur de services identifié et aux zones de portée associées.
et selon lequel pour au moins un des services accessibles auprès de l'objet communiquant fournisseur de services identifié (3a),
- on détermine une seconde liste (L₂) d'objets communicants consommateurs de services en fonction dudit service et de la zone de portée associée en utilisant les informations relatives aux localisations et identifications respectives des objets communicants consommateurs de services,
- et on déclenche au moins l'envoi (E₂) aux objets communicants consommateurs de services (3b) de ladite seconde liste, d'une information relative aux services accessibles auprès de l'objet communiquant fournisseur de services identifié.

2. Procédé selon la revendication 1 selon lequel, en réponse à une requête issue d'un objet communicant (3),
- on détermine une troisième liste (L₃) de services accessibles auprès d'objets communicants fournisseurs de services figurant dans l'annuaire, en fonction de la requête et relativement à la localisation et à l'identification de l'objet communicant (3) dont la requête est issue,
- on déclenche l'envoi (E₃) à l'objet communicant d'une information relative à des services de ladite troisième liste (L₃).

3. Système de gestion (2) d'un ensemble d'objets communicants (3) comportant :
- un annuaire de services (4) répertoriant des informations relatives à des objets communicants fournisseurs de services (3a), à des services respectifs accessibles auprès de ces objets communicants fournisseurs de services et à des zones de portée respectivement associées a des services des fournisseurs de services,
- des moyens de localisation et d'identification (5,7) d'objets communicants consommateurs de services (3b),
- des moyens d'interprétation des informations de localisation (11) des objets communicants consommateurs de services (3b) par rapport aux zones de portée de services répertoriées dans l'annuaire,
- des moyens d'interprétation des informations d'identification (13) des objets communicants consommateurs de services (3b) par rapport aux services répertoriés dans l'annuaire,
- des moyens de détermination (17) d'une liste de services (L₁) accessibles auprès d'objets communicants fournisseurs de services figurant dans l'annuaire, en fonction des résultats délivrés par les moyens d'interprétation des informations de localisation et d'identification des objets communicants fournisseurs de services,
- des moyens (19) pour déclencher au moins la transmission (E₁) à un objet communicant consommateur de services (3b) identifié d'une information relative aux services de ladite première liste (L1),
ledit système étant **caractérisé en ce qu'**il comprend en outre :
- des moyens d'identification et de localisation (5,7) d'objets communicants fournisseurs de services (3a),
- et des moyens de mise à jour (9) de l'annuaire de services (4) à partir des informations relatives à l'identification et la localisation des objets communicants fournisseurs de services,
- des moyens (17') pour déterminer, pour au moins un service accessible auprès d'un objet communiquant fournisseur de services identifié (3a), une seconde liste (L2) d'objets communicants consommateurs de services (3b) en fonction dudit service et de la zone de portée associée relativement aux localisations et identifications respectives des objets communicants consommateurs de services,
- des moyens (19') pour déclencher au moins l'envoi (E₂), à des objets communicants consommateurs de services de ladite seconde liste, d'une information relative aux services accessibles auprès de l'objet communiquant fournisseur de services identifié.

4. Système (2) selon la revendication 3 comprenant :
- des moyens (17") pour, en réponse à une requête issue d'un objet communicant (3), déterminer une troisième liste (L₃) de services accessibles auprès d'objets communicants fournisseurs de services (3a) figurant dans l'annuaire (4), en fonction d'au moins la requête et relativement à la localisation et à l'identification de l'objet communicant (3) dont la requête est issue, et
- des moyens (19") pour déclencher au moins l'envoi (E₃) à l'objet communicant d'une information relative aux services de ladite troisième liste (L₃).

## Claims

1. Method of managing a set of communicating objects (3), wherein a service directory (4) lists information concerning service provider communicating objects (3a), respective services accessible from these service provider communicating objects and coverage areas respectively associated with service provider services, the method including the following steps:
- locating a service consumer communicating object (3b) and identifying it through an identification,
- determining a first list (L₁) of the services accessible from the service provider communicating objects included in the directory, according to the location and the identification by using the information concerning the services accessible from the service provider communicating objects and the coverage areas associated with said services, and initiating at least the transmission to the identified service consumer communicating object (3b), of information concerning the services of said first list (L₁); said method being **characterized in that** it further includes the following steps:
- locating a service provider communicating object (3a) and identifying it,
- updating in the service directory (4) the information concerning the services accessible from the identified service provider object and the associated coverage areas; and wherein, for at least one of the services accessible from the identified service provider communicating object (3a),
- a second list (L₂) of service consumer communicating objects is determined according to said service and the associated coverage area by using the information concerning the respective locations and identifications of the service consumer communicating objects,
- and at least the transmission (E₂) of information concerning the services accessible from the identified service provider communicating object to the service consumer communicating objects (3b) of said second list is initiated.

2. Method according to claim 1, wherein, in response to a request from a communicating object (3),
- a third list (L₃) of services accessible from service provider communicating objects included in the directory is determined, according to the request and relative to the location and identification of the communicating object (3) from which the request is issued,
- the transmission (E₃) of information concerning services of said third list (L₃) to the communicating object is initiated.

3. System (2) for managing a set of communicating objects (3) including:
- a service directory (4) listing information concerning service provider communicating objects (3a), respective services accessible from these service provider communicating objects and coverage areas respectively associated with service provider services,
- means of locating and identifying (5, 7) service consumer communicating objects (3b),
- means of interpreting location information (11) of service consumer communicating objects (3b) regarding the coverage areas of services listed in the directory,
- means of interpreting identification information (13) of service consumer communicating objects (3b) regarding the services listed in the directory,
- means of determining (17) a list of services (L₁) accessible from service provider communicating objects included in the directory, according to the results provided by the means of interpreting the location and identification information of service provider communicating objects,
- means (19) for initiating at least the transmission (E₁) of information concerning the services of said first list (L₁) to a service consumer communicating object (3b),
said system being **characterized in that** it further includes:
- means of identifying and locating (5, 7) service provider communicating objects (3a),
- and means of updating (9) the service directory (4) from information concerning the identification and location of the service provider communicating objects,
- means (17') of determining, for at least one service accessible from an identified service provider communicating object (3a), a second list (L₂) of service consumer communicating objects (3b) according to said service and the associated coverage area relative to the respective locations and identifications of the service consumer communicating objects,
- means (19') for initiating at least the transmission (E₂) of information concerning the services accessible from the identified service provider communicating object to service consumer communicating objects of said second list.

4. System (2) according to claim 3, including:
- means (17") of, in response to a request from a communicating object (3), determining a third list (L₃) of services accessible from service provider communicating objects (3a) included in the directory (4), according to at least the request and relative to the location and identification of the communicating object (3) from which the request was issued, and
- means (19") for initiating at least the transmission (E₃) of information concerning the services of said third list (L₃) to the communicating object.

## Patentansprüche

1. Verfahren zur Verwaltung einer Gruppe von kommunizierenden Objekten (3), bei dem ein Diensteverzeichnis (4) Informationen bezüglich von Dienste anbietenden kommunizierenden Objekten (3a), von jeweiligen Diensten, die in diesen Dienste anbietenden kommunizierenden Objekten zugänglich sind, und von Reichweitenzonen, die jeweils Diensten der Dienstanbieter zugeordnet sind, auflistet, wobei das Verfahren die folgenden Schritte aufweist:
- Lokalisierung eines Dienste verbrauchenden kommunizierenden Objekts (3b) und es durch eine Identifizierung zu identifizieren,
- Bestimmen einer ersten Liste (L₁) der Dienste, die in im Verzeichnis aufgeführten Dienste anbietenden kommunizierenden Objekten zugänglich sind, in Abhängigkeit von der Lokalisierung und der Identifizierung unter Verwendung der Informationen bezüglich der in den Dienste anbietenden kommunizierenden Objekten zugänglichen Dienste und der diesen Diensten zugeordneten Reichweitenzonen, und
- Auslösen mindestens des Sendens einer Information bezüglich der Dienste der ersten Liste (L₁) an das identifizierte Dienste verbrauchende kommunizierende Objekt (3b);
wobei das Verfahren **dadurch gekennzeichnet ist, dass** es außerdem die folgenden Schritte aufweist:
- Lokalisierung eines Dienste anbietenden kommunizierenden Objekts (3a) und es zu Identifizieren,
- Aktualisierung im Diensteverzeichnis (4) der Informationen bezüglich der im identifizierten Dienste anbietenden Objekt zugänglichen Dienste und der zugeordneten Reichweitenzonen,
und gemäß dem für mindestens einen der im identifizierten Dienste anbietenden kommunizierenden Objekt (3a) zugänglichen Dienste,
- eine zweite Liste (L₂) von Dienste verbrauchenden kommunizierenden Objekten in Abhängigkeit vom Dienst und von der zugeordneten Reichweitenzone unter Verwendung der Informationen bezüglich der jeweiligen Lokalisierungen und Identifizierungen der Dienste verbrauchenden kommunizierenden Objekte bestimmt wird,
- und mindestens das Senden (E₂) einer Information bezüglich der im identifizierten Dienste anbietenden kommunizierenden Objekt zugänglichen Dienste an die Dienste verbrauchenden kommunizierenden Objekte (3b) der zweiten Liste ausgelöst wird.

2. Verfahren nach Anspruch 1, bei dem als Antwort auf eine von einem kommunizierenden Objekt (3) stammende Anfrage
- eine dritte Liste (L₃) von in Dienste anbietenden kommunizierenden Objekten zugänglichen Diensten, die im Verzeichnis aufgelistet sind, in Abhängigkeit von der Anfrage und bezüglich der Lokalisierung und der Identifizierung des kommunizierenden Objekts (3), von dem die Anfrage stammt, bestimmt wird,
- das Senden (E₃) einer Information bezüglich von Diensten der dritten Liste (L₃) an das kommunizierende Objekt ausgelöst wird.

3. Verwaltungssystem (2) einer Gruppe von kommunizierenden Objekten (3), das aufweist:
- ein Diensteverzeichnis (4), das Informationen bezüglich von Dienste anbietenden kommunizierenden Objekten (3a), von jeweils in diesen Dienste anbietenden kommunizierenden Objekten zugänglichen Diensten und von Reichweitenzonen, die jeweils Diensten der Diensteanbieter zugeordnet sind, auflistet,
- Mittel zur Lokalisierung und zur Identifizierung (5, 7) von Dienste verbrauchenden kommunizierenden Objekten (3b),
- Mittel zur Interpretation der Lokalisierungsinformationen (11) der Dienste verbrauchenden kommunizierenden Objekte (3b) im Verhältnis zu der Reichweitenzonen von Diensten, die im Verzeichnis aufgelistet sind,
- Mittel zur Interpretation der Identifizierungsinformationen (13) der Dienste verbrauchenden kommunizierenden Objekte (3b) im Verhältnis zu der im Verzeichnis aufgelisteten Dienste,
- Mittel zur Bestimmung (17) einer Liste von Diensten (L₁), die in den Dienste anbietenden kommunizierenden Objekten zugänglich sind, die im Verzeichnis aufgelistet sind, in Abhängigkeit von den Ergebnissen, die von den Mitteln zur Interpretation der Lokalisierungs- und Identifizierungsinformationen der Dienste anbietenden kommunizierenden Objekte geliefert werden,
- Mittel (19), um mindestens die Übertragung (E₁) einer Information bezüglich der Dienste der ersten Liste (L₁) an ein identifiziertes Dienste verbrauchendes kommunizierendes Objekt (3b) auszulösen,
wobei das System **dadurch gekennzeichnet ist, dass** es außerdem aufweist:
- Mittel zur Identifizierung und zur Lokalisierung (5, 7) von Dienste anbietenden kommunizierenden Objekten (3a),
- und Aktualisierungsmittel (9) des Diensteverzeichnisses (4) ausgehend von den Informationen bezüglich der Identifizierung und der Lokalisierung der Dienste anbietenden kommunizierenden Objekte,
- Mittel (17'), um für mindestens einen in einem identifizierten Dienste anbietenden kommunizierenden Objekt (3a) zugänglichen Dienst eine zweite Liste (L₂) von Dienste verbrauchenden kommunizierenden Objekten (3b) in Abhängigkeit von dem Dienst und von der zugeordneten Reichenweitenzone bezüglich der jeweiligen Lokalisierungen und Identifizierungen der Dienste verbrauchenden kommunizierenden Objekte zu bestimmen,
- Mittel (19'), um mindestens das Senden (E₂) einer Information bezüglich der im identifizierten Dienste anbietenden kommunizierenden Objekt zugänglichen Dienste an Dienste verbrauchende kommunizierende Objekte der zweiten Liste auszulösen.

4. System (2) nach Anspruch 3, das aufweist:
- Mittel (17"), um, als Antwort auf eine von einem kommunizierenden Objekt (3) stammende Anfrage, eine dritte Liste (L₃) von in Dienste anbietenden kommunizierenden Objekten zugänglichen Diensten (3a) zu bestimmen, die im Verzeichnis (4) aufgelistet sind, in Abhängigkeit von mindestens der Anfrage und bezüglich der Lokalisierung und der Identifizierung des kommunizierenden Objekts (3), von dem die Anfrage stammt, und
- Mittel (19"), um mindestens das Senden (E₃) einer Information bezüglich der Dienste der dritten Liste (L₃) an das kommunizierende Objekt auszulösen.
